(19) Europäisches Patentamt
European Patent Office
Office européen des brevets

(11) **EP 4 756 894 A1**

(12) **EUROPEAN PATENT APPLICATION**
published in accordance with Art. 153(4) EPC

(43) Date of publication:
**10.06.2026 Bulletin 2026/24**

(21) Application number: **24861483.6**

(22) Date of filing: **08.04.2024**

(51) International Patent Classification (IPC):
**H01M 4/13** (2010.01)

(52) Cooperative Patent Classification (CPC):
**H01M 4/13; H01M 4/139; H01M 10/0525;
H01M 50/533; H01M 50/538;** Y02E 60/10;
Y02P 70/50

(86) International application number:
**PCT/CN2024/086537**

(87) International publication number:
**WO 2025/050632 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 CN 202311157607**

(71) Applicant: **Contemporary Amperex Technology
Co., Limited
Ningde, Fujian 352100 (CN)**

(72) Inventors:
• **XU, Hu**
**Ningde, Fujian 352100 (CN)**
• **JIN, Haizu**
**Ningde, Fujian 352100 (CN)**
• **YANG, Rui**
**Ningde, Fujian 352100 (CN)**
• **LI, Can**
**Ningde, Fujian 352100 (CN)**
• **NIU, Shaojun**
**Ningde, Fujian 352100 (CN)**
• **ZHAO, Fenggang**
**Ningde, Fujian 352100 (CN)**

(74) Representative: **Lorenz Seidler Gossel Part. mbB
Widenmayerstr. 23
80538 München (DE)**

(54) **BATTERY CELL, BATTERY, ELECTRIC APPARATUS, CATHODE PLATE AND MANUFACTURING METHOD THEREFOR**

(57)     Provided are a battery cell (200), a battery (300), an electric apparatus, a cathode plate (10a) and a manufacturing method therefor. The battery cell (200) comprises: a cathode plate (10a), which comprises a cathode current collector (1) and a cathode active material layer (2) arranged on the cathode current collector (1), wherein the cathode active material layer (2) comprises a first thinned area (31), and the first thinned area (31) is located on the side edge of the cathode current collector (1) that is opposite a cathode tab (5); and an anode plate (10b), which is arranged such that the anode plate (10b) and the cathode plate (10a) are stacked in a first direction (X), wherein the anode plate (10b) comprises an anode current collector (1') and an anode active material layer (2') arranged on the anode current collector (1'), the anode active material layer (2') comprises a second thinned area (3'), the second thinned area (3') is arranged on the side edge of the anode current collector (1') that is provided with an anode tab (4'), and the second thinned area (3') at least partially overlaps the first thinned area (31). The first thinned area (31) can reduce lithium ions deintercalated from the cathode active material layer (2) of the cathode plate (10a), so that the anode plate (10b) has enough capacity to accommodate the lithium ions de-intercalated from the cathode plate (10a), thereby alleviating lithium plating and improving the performance of the battery.

FIG. 5

**Description**

**CROSS-REFERENCE TO RELATED APPLICATIONS**

The present application claims priority to Chinese Patent Application No. 202311157607.6, filed on September 8, 2023 and entitled "BATTERY CELL, BATTERY, ELECTRIC APPARATUS, CATHODE ELECTRODE SHEET, AND MANUFACTURING METHOD OF CATHODE ELECTRODE SHEET", which is incorporated herein by reference in its entirety.

**TECHNICAL FIELD**

The present application relates to the field of battery technology, in particular to a battery cell, a battery, an electric apparatus, a cathode electrode sheet, and a manufacturing method of a cathode electrode sheet.

**BACKGROUND**

In some related technologies, a battery includes a battery cell, and the battery cell includes an electrode assembly formed by winding an electrode sheet and a separator, and an injected electrolyte. It has been found through research that batteries may suffer from lithium precipitation, which leads to battery performance degradation.

**SUMMARY**

Some embodiments of the present application provide a battery cell, a battery, an electric apparatus, a cathode electrode sheet, and a manufacturing method of a cathode electrode sheet, for mitigating the problem of battery performance degradation.

Some embodiments of the present application provide a battery cell. The battery cell includes: a cathode electrode sheet, including a cathode current collector and a cathode active material layer disposed at the cathode current collector, where the cathode active material layer includes a first thinned region, the first thinned region is located on a side of the cathode current collector facing a cathode tab; and an anode electrode sheet, stacked with the cathode electrode sheet along a first direction, where the anode electrode sheet includes an anode current collector and an anode active material layer disposed at the anode current collector, the anode active material layer includes a second thinned region, the second thinned region is disposed on a side of the anode current collector on which an anode tab is provided, and the second thinned region at least partially overlaps with the first thinned region.

In the above embodiments, the first thinned region is disposed on the side of the cathode current collector facing the cathode tab, and the first thinned region at least partially overlaps with the second thinned region. The first thinned region can reduce lithium ions deintercalated from the cathode active material layer of the cathode electrode sheet, and change a CB value at a position corresponding to the first thinned region, so that a capacity per unit area of the anode electrode sheet is greater than a capacity per unit area of the cathode electrode sheet, allowing the anode electrode sheet to have a sufficiently large capacity to accommodate the lithium ions deintercalated from the cathode electrode sheet, thereby alleviating lithium precipitation and improving battery performance.

In some embodiments, a dimension W1 of the first thinned region along a second direction is less than or equal to a dimension W2 of the second thinned region along the second direction, where the second direction intersects the first direction, and the second direction is parallel to a direction in which the anode tab is away from the anode current collector.

In the above embodiments, an excessively large first thinned region reduces the energy density of the battery, but an excessively small first thinned region is unable to change the CB value. Therefore, the dimension W1 of the first thinned region along the second direction being less than or equal to the dimension W2 of the second thinned region along the second direction Y can not only satisfy the energy density requirements of the battery but also have a function of changing the CB value.

In some embodiments, $W1 \in [2, 20]$ mm, and $W2 \in [2, 20]$ mm.

In the above embodiments, by setting dimension ranges of the first thinned region and the second thinned region along the second direction, the CB value is changed while the energy density requirements of the battery are satisfied, thereby alleviating lithium precipitation and improving battery performance.

In some embodiments, $W1 \in [3, 8]$ mm, and $W2 \in [3, 10]$ mm.

In the above embodiments, by further defining the dimension ranges of the first thinned region and the second thinned region along the second direction, the CB value can be better changed while the energy density requirements of the battery are satisfied, thereby alleviating lithium precipitation and improving battery performance.

In some embodiments, the first thinned region and the second thinned region are each thinned from a position away from the anode tab toward a position close to the anode tab; and a distance S1 between a position from which the first thinned region is thinned and the anode tab is greater than or equal to a distance S2 between a position from which the second thinned region is thinned and the anode tab.

In the above embodiments, along the direction in which the anode tab is away from the anode current collector, the position from which the first thinned region is thinned precedes the position from which the second thinned region is thinned, so that the cathode electrode sheet is first thinned in the region where the anode electrode sheet has not yet been thinned, reducing lithium ions deintercalated from the cathode active material layer of the cathode electrode sheet, better changing the CB value at the position corresponding to the first thinned region, and enabling the anode electrode sheet to have a sufficiently large capacity to accommodate the lithium ions deintercalated from the cathode electrode sheet, thereby alleviating lithium precipitation and improving battery performance.

In some embodiments, a distance S3 between the position from which the first thinned region is thinned and the position from which the second thinned region is thinned is in the range of [0, 5] mm.

In the above embodiments, by defining the distance between the position from which the first thinned region is thinned and the position from which the second thinned region is thinned, the CB value can be changed while the energy density requirements of the battery are satisfied, thereby alleviating lithium precipitation and improving battery performance.

In some embodiments, $S3 \in [0, 3]$ mm.

In the above embodiments, by further defining the distance between the position from which the first thinned region is thinned and the position from which the second thinned region is thinned, the CB value can be better changed while the energy density requirements of the battery are satisfied, thereby alleviating lithium precipitation and improving battery performance.

In some embodiments, the cathode electrode sheet further includes a first insulating layer, and the first insulating layer is disposed on a side of the first thinned region away from the cathode tab.

In the above embodiments, the first insulating layer is away from the cathode tab relative to the first thinned region. In the operation of dividing the current collector into two electrode sheets, the position of the first insulating layer of the current collector rather than the cathode active material layer is cut, reducing the occurrence of burrs on the cathode active material layer and mitigating the problem of active material detachment caused by cutting the current collector into electrode sheets.

In some embodiments, the cathode active material layer further includes a third thinned region, and the third thinned region is located on a side of the cathode current collector on which the cathode tab is provided.

In the above embodiments, disposing the third thinned region on the side of the cathode current collector on which the cathode tab is provided can increase the degree of infiltration of the electrolyte into the cathode electrode sheet, and can change a CB value at a position corresponding to the third thinned region, so that a capacity per unit area of the active material of the anode electrode sheet is greater than a capacity per unit area of the active material of the cathode electrode sheet, thereby alleviating lithium precipitation and improving battery performance.

In some embodiments, the cathode electrode sheet further includes a second insulating layer, and the second insulating layer is located between the third thinned region and the cathode tab.

In the above embodiments, the second insulating layer is closer to the cathode tab relative to the third thinned region. During cutting of the cathode tab, if a position exceeding the cathode tab is cut, the cut position is the second insulating layer rather than the cathode active material layer, reducing the occurrence of burrs on the cathode active material layer and mitigating the problem of active material detachment caused by cutting the cathode tab.

In some embodiments, the cathode active material layer further includes a fourth thinned region, and the fourth thinned region is located between the side of the cathode current collector on which the cathode tab is provided and the side facing the cathode tab.

In the above embodiments, the fourth thinned region can allow more electrolyte to pass through and can accommodate more electrolyte, so that the electrolyte can fully infiltrate the electrode sheet in a short time, improving the infiltration effect of the electrolyte on the electrode sheet, allowing the active material to react more fully with the electrolyte, and mitigating the problem of insufficient electrolyte infiltration in the central region of the electrode assembly, thereby improving battery performance. Moreover, a CB value at a position corresponding to the fourth thinned region can be changed, so that the capacity per unit area of the active material of the anode electrode sheet is greater than the capacity per unit area of the active material of the cathode electrode sheet, thereby alleviating lithium precipitation and improving battery performance.

In some embodiments, the cathode active material layer further includes a fifth thinned region, and the fifth thinned region is located in a corner region of the cathode electrode sheet after winding.

In the above embodiments, at the corner of the cathode electrode sheet after winding, there is a curvature at an interface between the electrode sheets, which easily leads to interface problems. The active material layer on the outer one of the cathode electrode sheet and the anode electrode sheet has a larger area. Therefore, disposing the fifth thinned region at the corner of the cathode electrode sheet after winding can change a CB value at the corner, so that the capacity per unit area of the anode electrode sheet is greater than the capacity per unit area of the cathode electrode sheet, mitigating the lithium precipitation problem caused by insufficient capacity of the anode electrode sheet and improving battery performance.

Some embodiments of the present application provide a battery, which includes a box assembly and the battery cell described above, where the battery cell is disposed within the box assembly.

The battery includes the battery cell in the above embodiments and therefore has the corresponding beneficial effects of the battery cell.

Some embodiments of the present application provide an electric apparatus, which includes the battery described above.

The electric apparatus includes the battery in the above embodiments and therefore has the corresponding beneficial effects of the battery.

Some embodiments of the present application provide a cathode electrode sheet, which includes: a cathode current collector; and a cathode active material layer disposed at the cathode current collector, where the cathode active material layer includes a first thinned region, and the first thinned region is located on a side of the cathode current collector facing a cathode tab.

In the above embodiments, the first thinned region is disposed on the side of the cathode current collector facing the cathode tab, and the first thinned region at least partially overlaps with a second thinned region. The first thinned region can reduce lithium ions deintercalated from the cathode active material layer of the cathode electrode sheet, and change a CB value at a position corresponding to the first thinned region, so that the capacity per unit area of the anode electrode sheet is greater than the capacity per unit area of the cathode electrode sheet, allowing the anode electrode sheet to have a sufficiently large capacity to accommodate the lithium ions deintercalated from the cathode electrode sheet, thereby alleviating lithium precipitation and improving battery performance.

Some embodiments of the present application provide a manufacturing method of a cathode electrode sheet, which includes the following steps: preparing a current collector, where the current collector has tab regions respectively on two opposite sides; applying an active material to a region of the current collector located between the two tab regions to form a cathode active material layer, and thinning a region of the cathode active material layer located in the middle of the two tab regions to form a thinned region; and dividing the current collector into two cathode electrode sheets in the thinned region.

In the above embodiments, the current collector is divided into two cathode electrode sheets from the central region between the two tab regions of the current collector, that is, the current collector is divided into two cathode electrode sheets from the middle position of the two first thinned regions. The first thinned region of each cathode electrode sheet is located on the side of the cathode current collector facing the cathode tab, which can increase the degree of infiltration of the electrolyte into the electrode sheet, and can change the CB value at the position corresponding to the first thinned region, so that the capacity per unit area of the anode electrode sheet is greater than the capacity per unit area of the cathode electrode sheet, mitigating the lithium precipitation problem caused by insufficient capacity of the anode electrode sheet and improving battery performance.

## BRIEF DESCRIPTION OF DRAWINGS

In order to more clearly illustrate the technical solutions of the embodiments of the present application, the drawings required to be used in the embodiments of the present application are briefly introduced below. It is obvious that the drawings described below are only some embodiments of the present application, and for those skilled in the art, other drawings can be obtained from the drawings without creative efforts.

FIG. 1 is a schematic structural diagram of a vehicle disclosed in some embodiments of the present application;

FIG. 2 is a schematic structural exploded view of a battery disclosed in some embodiments of the present application;

FIG. 3 is a schematic diagram of a battery cell disclosed in some embodiments of the present application;

FIG. 4 is a schematic diagram of an electrode assembly disclosed in some embodiments of the present application;

FIG. 5 is a schematic side view of stacked electrode sheets of two polarities disclosed in some embodiments of the present application;

FIG. 6 is a schematic diagram of an anode electrode sheet disclosed in some embodiments of the present application;

FIG. 7 is a schematic side view of the anode electrode sheet shown in FIG. 6;

FIG. 8 is a schematic diagram of a first form of a cathode electrode sheet disclosed in some embodiments of the present application;

FIG. 9 is a schematic side view of the cathode electrode sheet shown in FIG. 8;

FIG. 10 is a schematic diagram of a second form of a cathode electrode sheet disclosed in some embodiments of the present application;

FIG. 11 is a schematic side view of the cathode electrode sheet shown in FIG. 10;

FIG. 12 is a schematic side view of a third form of a cathode electrode sheet disclosed in some embodiments of the present application;

FIG. 13 is a schematic side view of a fourth form of a cathode electrode sheet disclosed in some embodiments of the present application;

FIG. 14 is a schematic side view of a fifth form of a cathode electrode sheet disclosed in some embodiments of the present application;

FIG. 15 is a schematic diagram of a first form of a current collector disclosed in some embodiments of the present application;

FIG. 16 is a schematic side view of the current collector shown in FIG. 15; and

FIG. 17 is a schematic diagram of a second form of a current collector disclosed in some embodiments of the present application.

In the drawings, the figures are not drawn to actual scale.

Reference numerals: 10a. cathode electrode sheet; 1. cathode current collector; 11. first side; 12. second side; 13. third side; 14. fourth side; 15. first side surface; 16. second side surface; 2. cathode active material layer; 3a. thinned region; 31. first thinned region; 32. third thinned region; 33. fourth thinned region; 34. fifth thinned region; 4. flat region; 5. cathode tab; 6. first insulating layer; 7. second insulating layer; 10b. anode electrode sheet; 1'. anode current collector; 2'. anode active material layer; 3'. second thinned region; 4'. anode tab; 5'. third insulating layer; 10. electrode sheet; 20. current collector; 30. tab region; 40. separator; 100. electrode assembly; 200. battery cell; 201. casing assembly; 201a. casing; 201b. end cover; 202. cathode terminal; 203. anode terminal; 204. explosion-proof valve; 300. battery; 301. box assembly; 301a. box; 301b. cover; 400. vehicle; 401. axle; 402. wheel; 403. motor; and 404. controller.

## DESCRIPTION OF EMBODIMENTS

The implementations of the present application are further described in detail below with reference to the drawings and embodiments. The detailed description of the following embodiments and the drawings are used to exemplarily illustrate the principles of the present application, but cannot be used to limit the scope of the present application, that is, the present application is not limited to the described embodiments.

In the description of the present application, it should be noted that, unless otherwise specified, "multiple" means two or more; and orientation or positional relationships indicated by the terms "upper", "lower", "left", "right", "inner", "outer", and the like are only for convenience of describing the present application and simplifying the description rather than for indicating or implying that the indicated apparatus or element must have a specific orientation or be constructed and operated in a specific orientation, and therefore cannot be understood as a limitation on the present application. In addition, the terms "first", "second", "third", and the like are only for descriptive purposes and cannot be understood as indicating or implying relative importance. "Perpendicular" is not strictly perpendicular, but within an allowable error range. "Parallel" is not strictly parallel, but within an allowable error range.

The directional terms appearing in the following description all refer to the directions shown in the figures and do not limit the specific structure of the present application. In the description of the present application, it should further be noted that, unless otherwise clearly specified and defined, the terms "mounting", "connection", and "join" should be understood in a broad sense. For example, they may be fixed connections, detachable connections, or integral connections; and they may be direct connections, or indirect connections through an intermediate medium. For those skilled in the art, the specific meanings of the above terms in the present application can be understood according to specific circumstances.

With the popularization and promotion of new energy vehicles, the charging and discharging performance, battery life, and the like of new energy vehicles are increasingly attracting people's attention and concern. As a type of rechargeable batteries, traction batteries are power sources of new energy vehicles and are widely used in the field of new energy vehicles.

In a battery manufacturing process, electrode sheets of different polarities and a separator generally need to be wound or stacked, and then subjected to subsequent hot pressing and other processes to form an electrode assembly. The electrode sheet is generally obtained by applying an active material on a current collector. It has been found through research that a thickness of the active material layer on the electrode sheet affects battery performance.

Based on this, some embodiments of the present application provide a battery cell, a battery, an electric apparatus, a cathode electrode sheet, and a manufacturing method of a cathode electrode sheet. By setting the thickness of the cathode active material layer, battery performance is improved.

The battery of the present application can be used in electric apparatuses and can provide electrical energy for electric apparatuses. The electric apparatuses may be mobile phones, portable devices, laptop computers, electric bicycles, electric vehicles, ships, spacecraft, electric toys, electric tools, or the like. For example, spacecraft include airplanes, rockets, space shuttles, spacecraft, and the like. Electric toys include fixed or mobile electric toys, such as game consoles, electric car toys, electric ship toys, and electric airplane toys. Electric tools include electric metal cutting tools, electric grinding tools, electric assembly tools, and electric railway tools, such as electric drills, electric grinders, electric wrenches, electric screwdrivers, electric hammers, impact drills, concrete vibrators, and electric planers.

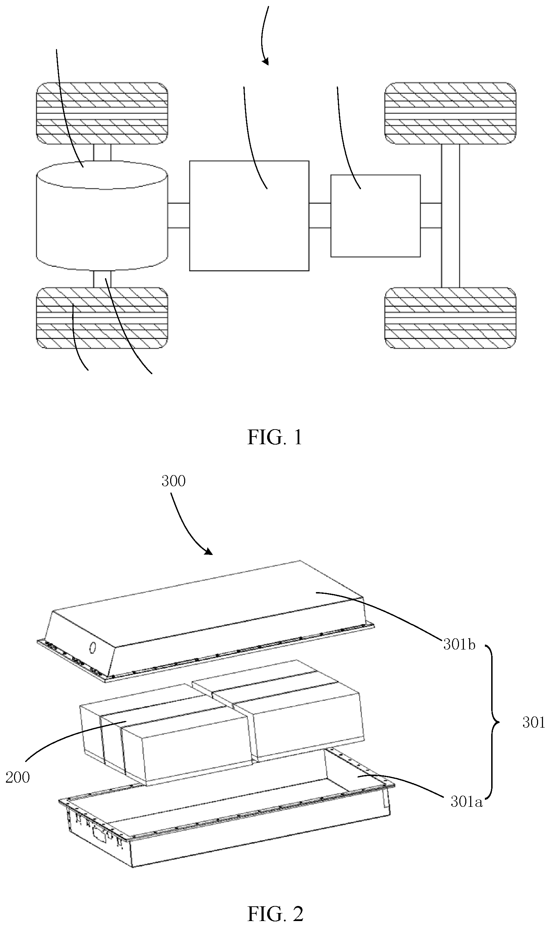

Referring to FIG. 1, the electric apparatus of the present application may be a vehicle 400, for example, a new energy vehicle. The new energy vehicle may be a battery electric vehicle, a hybrid electric vehicle, an extended-range electric vehicle, or the like.

The vehicle 400 includes an axle 401, wheels 402 connected to the axle 401, a motor 403, a controller 404, and a battery 300. The motor 403 is configured to drive the axle 401 to rotate, the controller 404 is configured to control the motor 403 to operate, and the battery 300 may be disposed at the bottom, front, or rear of the vehicle 400 to provide electrical energy for the operation of the motor 403 and other components in the vehicle.

Referring to FIG. 2, the battery 300 includes a box assembly 301 and at least one battery cell 200. The at least one battery cell 200 includes more than two battery cells 200. The multiple battery cells 200 may be connected in series, in parallel, or in series-parallel, where being connected in series-parallel refers to a combination of a series connection and a parallel connection. The interior of the box assembly 301 is a hollow structure, and the at least one battery cell 200 is accommodated within the box assembly 301.

The box assembly 301 may include two parts, which are referred to herein as a box 301a and a cover 301b. The box 301a and the cover 301b are engaged with each other. Multiple battery cells 100a, after being connected in series, in parallel, or in series-parallel, are placed in a sealed cavity formed by the box 301a and the cover 301b that are engaged with each other.

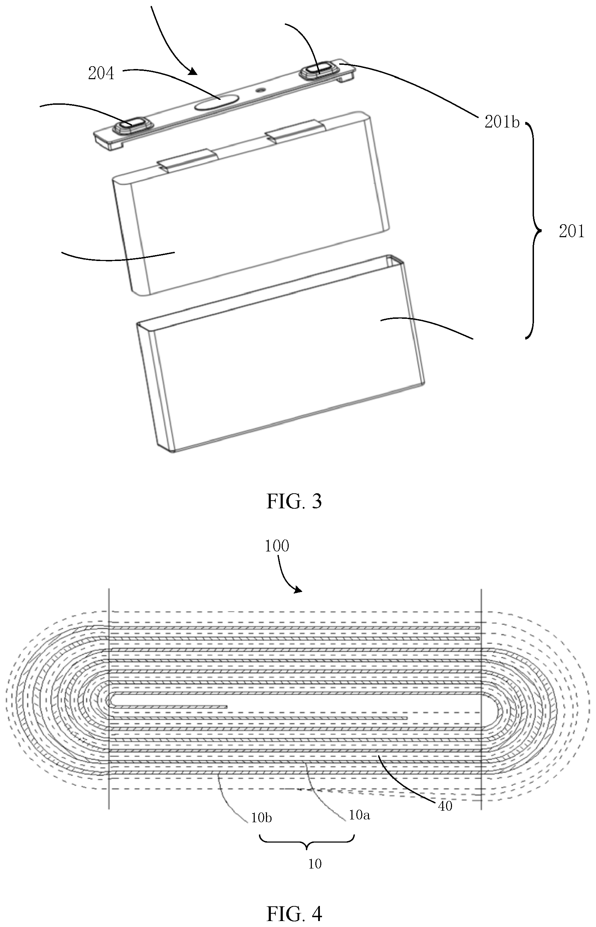

Referring to FIG. 3, each battery cell 200 includes an electrode assembly 100 and a casing assembly 201. The electrode assembly 100 is disposed within the casing assembly 201. The casing assembly 201 includes a casing 201a and an end cover 201b. The casing 201a is determined by a shape of one or more electrode assemblies 100 after combination. For example, the casing 201a may be a hollow cuboid, cube, or cylinder, and one surface of the casing 201a has an opening to allow one or more electrode assemblies 100 to be placed within the casing 201a. For example, when the casing 201a is a hollow cuboid or cube, one planar surface of the casing 201a is an open surface, meaning that this planar surface does not have a casing wall, allowing for communication between the inside and outside of the casing 201a. When the casing 201a is a hollow cylinder, a circular side surface of the casing 201a is an open surface, meaning that this circular side surface does not have a casing wall, allowing for communication between the inside and outside of the casing 201a. The end cover 201b is connected to the casing 201a at the opening of the casing 201a to form a sealed housing for placing the electrode assembly 100. The casing assembly 201 is filled with an electrolyte.

The end cover 201b is substantially plate-shaped, and the end cover 201b is provided with a cathode terminal 202, an anode terminal 203, and an explosion-proof valve 204. The cathode terminal 203 is connected to a cathode tab 5 of a cathode electrode sheet 10a. The anode terminal 204 is connected to an anode tab 5' of an anode electrode sheet 10b. The explosion-proof valve 204 may be a part of a flat surface of the end cover 201b, or may be welded to the flat surface of the end cover 201b. When too much gas is generated by the battery 400, the gas expands to make a gas pressure inside the casing rise above a preset value, the explosion-proof valve 204 can crack to allow for communication between the inside and outside of the casing, and the gas is released outward through the crack of the explosion-proof valve 204, thereby avoiding an explosion.

Referring to FIG. 4, the electrode assembly 100 includes an electrode sheet 10 and a separator 40. The electrode sheet 10 includes a cathode electrode sheet 10a and an anode electrode sheet 10b. The cathode electrode sheet 10a and the anode electrode sheet 10b have opposite polarities. The separator 40 is disposed between the cathode electrode sheet 10a and the anode electrode sheet 10b. The cathode electrode sheet 10a, the separator 40, and the anode electrode sheet 10b are sequentially stacked and wound to form the electrode assembly 100. Alternatively, the cathode electrode sheet 10a, the separator 40, and the anode electrode sheet 10b are sequentially stacked to form the electrode assembly 100. The separator 40 is made of an insulating material.

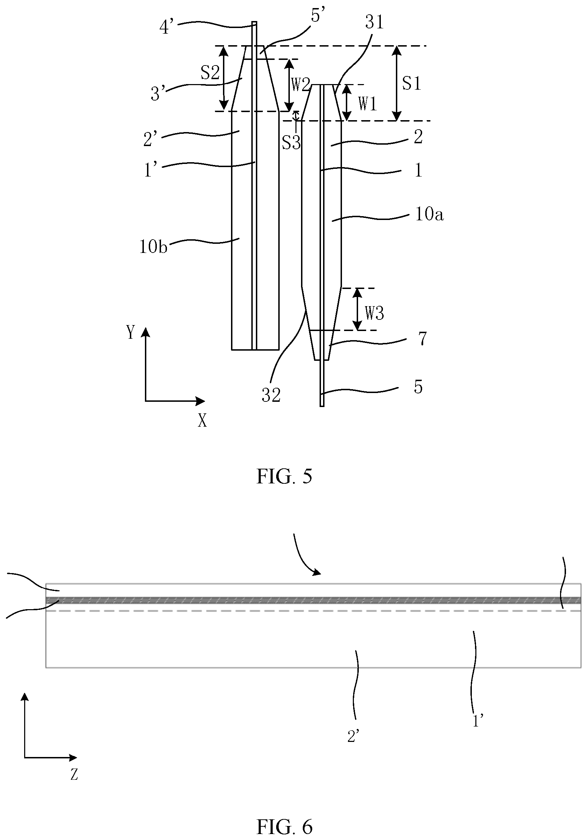

Referring to FIG. 5, some embodiments of the present application provide a battery cell, which includes a cathode electrode sheet 10a and an anode electrode sheet 10b.

The cathode electrode sheet 10a includes a cathode current collector 1 and a cathode active material layer 2 disposed at the cathode current collector 1, where the cathode active material layer 2 includes a first thinned region 31, and the first thinned region 31 is located on a side of the cathode current collector 1 facing a cathode tab 5.

The anode electrode sheet 10b is stacked with the cathode electrode sheet 10a along a first direction X. The anode electrode sheet 10b includes an anode current collector 1' and an anode active material layer 2' disposed at the anode current collector 1'. The anode active material layer 2' includes a second thinned region 3', the second thinned region 3' is disposed on a side of the anode current collector 1' on which an anode tab 4' is provided, and the second thinned region 3' at least partially overlaps with the first thinned region 31.

The cathode current collector 1 and the anode current collector 1' are structures or components that collect current, and mainly refer to a metal foil such as a copper foil or an aluminum foil in a lithium-ion battery.

The anode active material layer 2' is formed by applying an anode active material to the anode current collector 1'. The anode active material includes at least one of lithium nickel cobalt manganese oxide, lithium iron phosphate, lithium nickelate, lithium nickel manganese oxide, and lithium nickel manganese iron oxide, or carbon materials (graphite, hard carbon, soft carbon, carbon nanotubes, and graphene), where graphite includes at least one of artificial graphite, natural graphite, and mesocarbon microbeads.

The cathode active material layer 2 is formed by applying a cathode active material to the cathode current collector 1. The cathode active material includes at least one of lithium titanate, a silicon negative electrode, a silicon-carbon negative electrode, a lithium metal negative electrode material, a tin-based negative electrode material, and a tin oxide negative electrode material.

The cathode electrode sheet 10a, the separator 40, and the anode electrode sheet 10b described above are sequentially stacked and wound to form the electrode assembly 100. Alternatively, the cathode electrode sheet 10a, the separator 40, and the anode electrode sheet 10b are sequentially stacked to form the electrode assembly 100. The electrode assembly 100 is placed inside the casing assembly 201, and an electrolyte is injected into the casing assembly 201 to form a battery cell 200. The electrolyte infiltrates an active material on the electrode sheet, and the active material can undergo a chemical reaction with the electrolyte for charging the battery.

Since the current collector has an uncoated region for arranging a tab, that is, a region uncoated with the active material. When the active material is applied to the current collector, the active material forms a thinned region with a slope at a transition position with the uncoated region, such as the second thinned region 3' of the anode active material layer 2' in FIG. 5.

When a lithium-ion battery is charged, lithium ions are deintercalated from the cathode active material layer 2 of the cathode electrode sheet 10a. These lithium ions are diffused in the electrolyte to a surface of the anode electrode sheet 10b and intercalated into the anode active material layer 2' of the anode electrode sheet 10b. Since the anode active material layer 2' has a second thinned region 3' at the position adjacent to the anode tab 4', the second thinned region 3' causes insufficient active material capacity of the anode electrode sheet 10b, meaning there is insufficient intercalation space to accommodate the lithium ions deintercalated from the cathode active material layer 2 of the cathode electrode sheet 10a, and the lithium ions can only precipitate on the surface of the anode electrode sheet 10b, causing lithium precipitation.

Therefore, in these embodiments of the present application, the first thinned region 31 is disposed on the side of the cathode current collector 1 facing the cathode tab 5, and the first thinned region 31 at least partially overlaps with the second thinned region 3'. The first thinned region 31 can reduce lithium ions deintercalated from the cathode active material layer 2 of the cathode electrode sheet 10a, and change a CB (Cell Balance) value at a position corresponding to the first thinned region 31, so that the capacity per unit area of the anode electrode sheet 10b is greater than the capacity per unit area of the cathode electrode sheet 10a, that is, CB value $\geq$ 1, allowing the anode electrode sheet 10b to have a sufficiently large capacity to accommodate the lithium ions deintercalated from the cathode electrode sheet 10a, thereby alleviating lithium precipitation and improving battery performance.

$$\text{CB value} = \text{capacity per unit area of anode electrode sheet} \, / \, \text{capacity per unit area of cathode electrode sheet.}$$

In some embodiments, a dimension W1 of the first thinned region 31 along the second direction Y is less than or equal to a dimension W2 of the second thinned region 3' along the second direction Y, where the second direction Y intersects the first direction X, and the second direction Y is parallel to a direction in which the anode tab 4' is away from the anode current collector 1'.

In the above embodiments, an excessively large first thinned region 31 reduces the energy density of the battery, but an excessively small first thinned region 31 is unable to change the CB value. Therefore, the dimension W1 of the first thinned region 31 along the second direction Y being less than or equal to the dimension W2 of the second thinned region 3' along the second direction Y can not only satisfy the energy density requirements of the battery but also have a function of changing the CB value.

In some embodiments, W1 $\in$ [2, 20] mm, and W2 $\in$ [2, 20] mm.

In the above embodiments, by setting dimension ranges of the first thinned region 31 and the second thinned region 3' along the second direction Y, the CB value is changed while the energy density requirements of the battery are satisfied, thereby alleviating lithium precipitation and improving battery performance.

In some embodiments, W1 $\in$ [3, 8] mm, and W2 $\in$ [3, 10] mm.

In the above embodiments, by further defining the dimension ranges of the first thinned region 31 and the second thinned region 3' along the second direction Y, the CB value can be better changed while the energy density requirements of the battery are satisfied, thereby alleviating lithium precipitation and improving battery performance.

In some embodiments, the first thinned region 31 and the second thinned region 3' are each thinned from a position away from the anode tab 4' toward a position close to the anode tab 4'; and a distance S1 between a position from which the first thinned region 31 is thinned and the anode tab 4' is greater than or equal to a distance S2 between a position from which the second thinned region 3' is thinned and the anode tab 4'.

In the above embodiments, along the direction in which the anode tab 4' is away from the anode current collector 1', the position from which the first thinned region 31 is thinned precedes the position from which the second thinned region 3' is thinned, or the first thinned region 31 and the second thinned region 3' are thinned from the same position, so that the cathode electrode sheet 10a is first thinned in a region where the anode electrode sheet 10b has not yet been thinned, reducing the lithium ions deintercalated from the cathode active material layer 2 of the cathode electrode sheet 10a, better changing the CB value at the position corresponding to the first thinned region 31, making the CB value greater than or equal to 1, and enabling the anode electrode sheet 10b to have a sufficiently large capacity to accommodate the lithium ions deintercalated from the cathode electrode sheet 10a, thereby alleviating lithium precipitation and improving battery performance.

In some embodiments, a distance S3 between the position from which the first thinned region 31 is thinned and the position from which the second thinned region 3' is thinned is in a range of [0, 5] mm.

In the above embodiments, by defining the distance between the position from which the first thinned region 31 is thinned and the position from which the second thinned region 3' is thinned, the CB value can be changed while the energy density requirements of the battery are satisfied, thereby alleviating lithium precipitation and improving battery performance.

In some embodiments, S3 $\in$ [0, 3] mm.

In the above embodiments, by further defining the distance between the position from which the first thinned region 31 is thinned and the position from which the second thinned region 3' is thinned, the CB value can be better changed while the energy density requirements of the battery are satisfied, thereby alleviating lithium precipitation and improving battery performance.

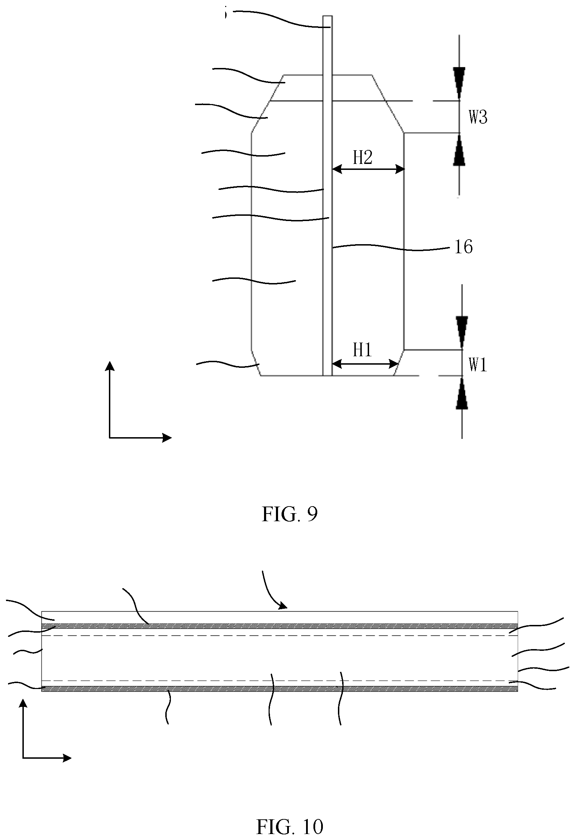

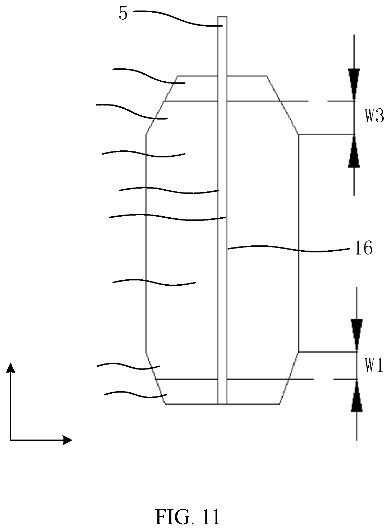

Referring to FIG. 10 and FIG. 11, in some embodiments, the cathode electrode sheet 10a further includes a first insulating layer 6, and the first insulating layer 6 is disposed on a side of the first thinned region 31 away from the cathode tab 5.

In the above embodiments, the first insulating layer 6 is away from the cathode tab 5 relative to the first thinned region 31. In a manufacturing method of a cathode electrode sheet 10a provided in subsequent embodiments of the present application, in an operation of dividing the current collector 20 into two electrode sheets, the position of the first insulating layer 6 of the current collector 20 rather than the cathode active material layer 2 is cut, reducing the occurrence of burrs on the cathode active material layer 2 and mitigating the problem of active material detachment caused by cutting the current collector 20 into electrode sheets.

A thickness of the first insulating layer 6 gradually decreases from the cathode tab 5 toward the first thinned region 31.

The first thinned region 31 and the first insulating layer 6 are in smooth transition connection to form an integral region, and a thickness of this integral region gradually decreases from the cathode tab 5 toward the first thinned region 31.

Referring to FIG. 5, in some embodiments, the cathode active material layer 2 further includes a third thinned region 32, and the third thinned region 32 is located on a side of the cathode current collector 1 on which the cathode tab 5 is provided.

In the above embodiments, disposing the third thinned region 32 on the side of the cathode current collector 1 on which the cathode tab 5 is provided can increase the degree of infiltration of the electrolyte into the cathode electrode sheet 10a, and can change the CB value at a position corresponding to the third thinned region 32, so that a capacity per unit area of the active material of the anode electrode sheet 10b is greater than a capacity per unit area of the active material of the cathode electrode sheet 10a, thereby alleviating lithium precipitation and improving battery performance. Moreover, step stress on the side of the cathode current collector 1 can be reduced, mitigating the problem of stress concentration on the side of the cathode current collector 1, reducing mutual extrusion forces when the electrode sheets swell, and reducing the phenomenon of electrode sheet squashing.

A thickness of the third thinned region 32 gradually decreases from the first thinned region 31 toward the cathode tab 5.

In some embodiments, a width W3 of the third thinned region 32 $\in$ [2, 20] mm. Optionally, W3 $\in$ [3, 15] mm.

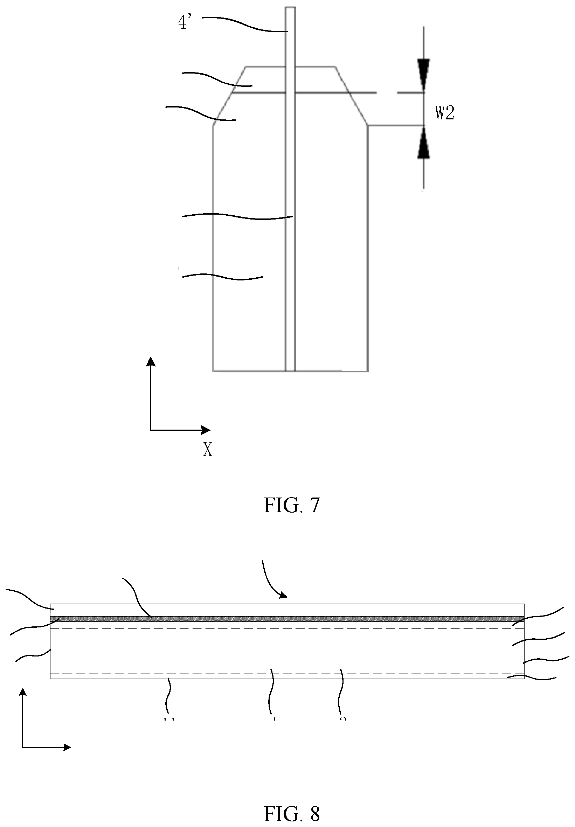

Referring to FIG. 8 and FIG. 9, in some embodiments, the cathode electrode sheet 10a further includes a second insulating layer 7, and the second insulating layer 7 is located between the third thinned region 32 and the cathode tab 5.

In the above embodiments, the second insulating layer 7 is closer to the cathode tab 5 relative to the third thinned region 32. During cutting of the cathode tab 5, if a position exceeding the cathode tab 5 is cut, the cut position is the second insulating layer 7 rather than the cathode active material layer 2, reducing the occurrence of burrs on the cathode active material layer 2 and mitigating the problem of active material detachment caused by cutting the cathode tab 5.

In some embodiments, a thickness of the second insulating layer 7 gradually decreases from the third thinned region 32 toward the cathode tab 5.

In some embodiments, the third thinned region 32 and the second insulating layer 7 are in smooth transition connection to form an integral region, and a thickness of this integral region gradually decreases from the third thinned region 32 toward the cathode tab 5.

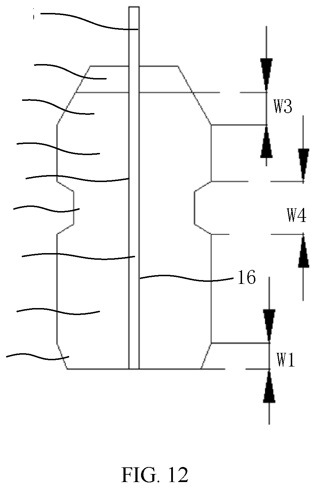

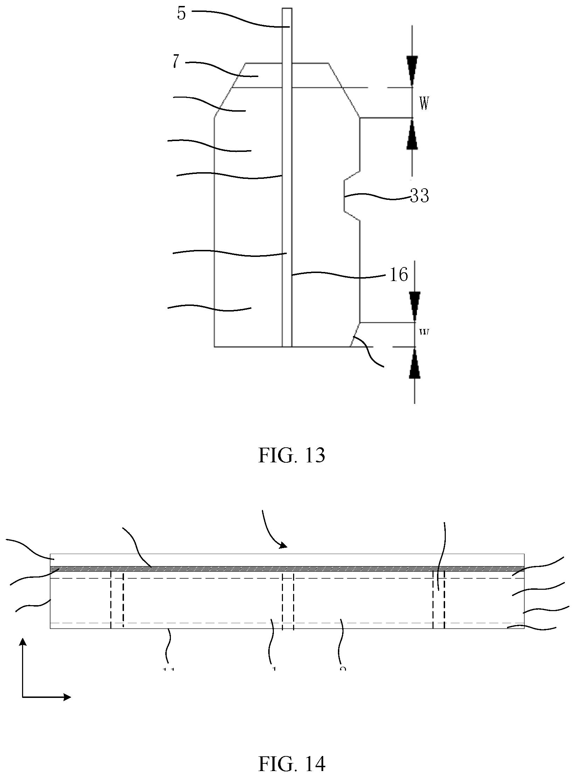

Referring to FIG. 12 and FIG. 13, in some embodiments, the cathode active material layer 2 further includes a fourth thinned region 33, and the fourth thinned region 33 is located between the side of the cathode current collector 1 on which the cathode tab 5 is provided and the side facing the cathode tab 5.

In the above embodiments, the fourth thinned region 33 can allow more electrolyte to pass through and can accommodate more electrolyte, so that the electrolyte can fully infiltrate the electrode sheet in a short time, improving the infiltration effect of the electrolyte on the electrode sheet, allowing the active material to react more fully with the electrolyte and mitigating the problem of insufficient electrolyte infiltration in the central region of the electrode assembly 100, thereby improving battery performance. Moreover, the CB value at the position corresponding to the fourth thinned region 33 can be changed, so that the capacity per unit area of the active material of the anode electrode sheet 10b is greater than the capacity per unit area of the active material of the cathode electrode sheet 10a, thereby alleviating lithium precipitation and improving battery performance.

In some embodiments, a width W4 of the fourth thinned region 33 accounts for a proportion range of [5%, 50%] of an entire width of the cathode electrode sheet 10a.

Referring to FIG. 14, in some embodiments, the cathode active material layer 2 further includes a fifth thinned region 34, and the fifth thinned region 34 is located in a corner region of the cathode electrode sheet 10a after winding.

In the above embodiments, at the corner of the cathode electrode sheet 10a after winding, there is a curvature at an interface between the electrode sheets, which can easily lead to interface problems. The active material layer on the outer one of the cathode electrode sheet 10a and the anode electrode sheet 10b has a larger area. Therefore, disposing the fifth thinned region 34 at the corner of the cathode electrode sheet 10a after winding can change the CB value at the corner, so that the capacity per unit area of the anode electrode sheet 10b is greater than the capacity per unit area of the cathode electrode sheet 10a, mitigating the lithium precipitation problem caused by insufficient capacity of the anode electrode sheet 10b and improving battery performance.

Referring to FIG. 2, some embodiments of the present application further provide a battery 300, which includes a box assembly 301 and the battery cell 200 in the above embodiments, where the battery cell 200 is disposed within the box assembly 301.

The battery 300 includes the battery cell 200 in the above embodiments and therefore has the corresponding beneficial effects of the battery cell 200.

Referring to FIG. 1, some embodiments of the present application further provide an electric apparatus, which includes the battery 300 in the above embodiments.

The electric apparatus includes the battery 300 in the above embodiments and therefore has the corresponding beneficial effects of the battery 300.

In some embodiments, the electric apparatus includes a vehicle 400.

Referring to FIG. 8 to FIG. 15, some embodiments of the present application further provide a cathode electrode sheet 10a, which includes a cathode current collector 1 and a cathode active material layer 2.

The cathode active material layer 2 is disposed at the cathode current collector 1, the cathode active material layer 2 includes a first thinned region 31, and the first thinned region 31 is located on a side of the cathode current collector 1 facing a cathode tab 5.

In the above embodiments, the first thinned region 31 is disposed on the side of the cathode current collector 1 facing the cathode tab 5, and the first thinned region 31 at least partially overlaps with a second thinned region 3'. The first thinned region 31 can reduce lithium ions deintercalated from the cathode active material layer 2 of the cathode electrode sheet 10a, and change a CB (Cell Balance) value at a position corresponding to the first thinned region 31, so that a capacity per unit area of an anode electrode sheet 10b is greater than a capacity per unit area of the cathode electrode sheet 10a, that is, CB value ≥ 1, allowing the anode electrode sheet 10b to have a sufficiently large capacity to accommodate the lithium ions deintercalated from the cathode electrode sheet 10a, thereby alleviating lithium precipitation and improving battery performance.

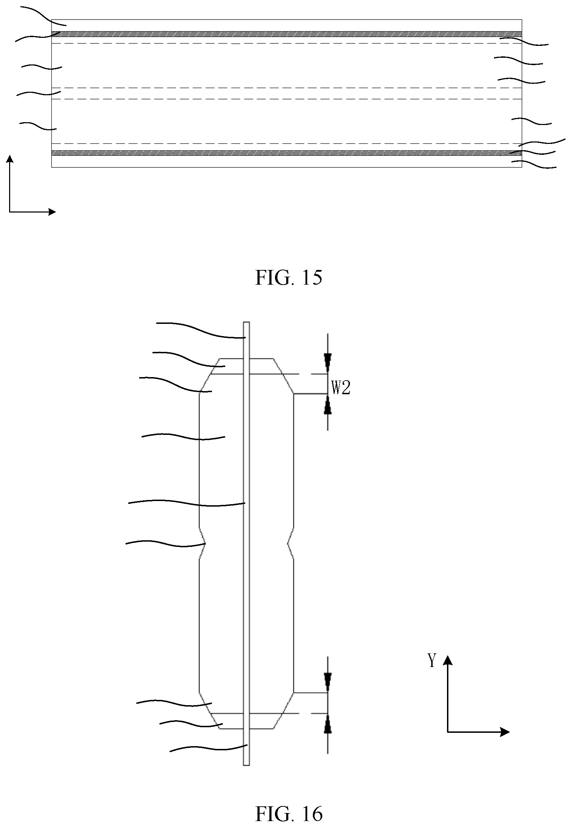

Referring to FIG. 15 to FIG. 17, some embodiments of the present application further provide a manufacturing method of a cathode electrode sheet 10a, which includes the following steps:

preparing a current collector 20, where the current collector 20 has tab regions 30 respectively on two opposite sides;
applying an active material to a region of the current collector 20 located between the two tab regions 30 to form a cathode active material layer 2, and thinning a region of the cathode active material layer 2 located in the middle of the two tab regions 30 to form a thinned region 3a; and
dividing the current collector 20 into two cathode electrode sheets in the thinned region 3a.

In the above embodiments, the current collector 20 is divided into two cathode electrode sheets 10a from the central region between the two tab regions 30 of the current collector 20, that is, the current collector 20 is divided into two cathode electrode sheets 10a from the middle position of the two first thinned regions 31. The first thinned region 31 of each cathode electrode sheet 10a is located on the side of the cathode current collector 1 facing the cathode tab 5, which can increase the degree of infiltration of the electrolyte into the electrode sheet 1, and can change the CB value at the position corresponding to the first thinned region 31, so that the capacity per unit area of the anode electrode sheet 10b is greater than the capacity per unit area of the cathode electrode sheet 10a, mitigating the lithium precipitation problem caused by insufficient capacity of the anode electrode sheet 10b and improving battery performance. Moreover, step stress on the side of the cathode current collector 1 can be reduced, mitigating the problem of stress concentration on the side of the cathode current collector 1, reducing mutual extrusion forces when the electrode sheets swell, and reducing the phenomenon of electrode sheet squashing.

The cathode electrode sheet 10a and the anode electrode sheet 10b are described in detail below with reference to FIG. 6 to FIG. 17.

Referring to FIG. 6 and FIG. 7, in some embodiments, the anode electrode sheet 10b includes an anode current collector 1' and an anode active material layer 2' disposed at the anode current collector 1'. The anode active material layer 2' includes a second thinned region 3', the second thinned region 3' is disposed on a side of the anode current collector 1' on which an anode tab 4' is provided, and the second thinned region 3' at least partially overlaps with the first thinned region 31.

In some embodiments, the anode electrode sheet 10b includes a third insulating layer 5', and the third insulating layer 5' is disposed on a side of the second thinned region 3' close to the anode tab 4'.

In the above embodiments, the third insulating layer 5' is closer to the anode tab 4' relative to the second thinned region 3'. During cutting of the anode tab 4', if a position exceeding the anode tab 4' is cut, the cut position is the third insulating layer 5' rather than the anode active material layer 2', reducing the occurrence of burrs on the anode active material layer 2' and mitigating the problem of active material detachment caused by cutting the anode tab 4'.

Referring to FIG. 8 and FIG. 9, the cathode electrode sheet 10a includes a cathode current collector 1 and a cathode active material layer 2. The cathode active material layer 2 is disposed at the cathode current collector 1, the cathode active material layer 2 includes a first thinned region 31, and the first thinned region 31 is located on a side of the cathode current collector 1 facing a cathode tab 5.

The cathode active material layer 2 further includes a flat region 4, and a thickness H1 of the first thinned region 31 is less than a thickness H2 of the flat region 4.

A length extension direction of the cathode electrode sheet 10a is parallel to a third direction Z. A width extension direction of the cathode electrode sheet 10a is parallel to a second direction Y. A thickness extension direction of the cathode electrode sheet 10a is parallel to a first direction X.

The third direction Z intersects both the second direction Y and the first direction X. The second direction Y intersects the first direction X. Optionally, the third direction Z is perpendicular to both the second direction Y and the first direction X. The second direction Y is perpendicular to the first direction X.

A thickness direction of the cathode active material layer 2 is consistent with a thickness direction of the cathode electrode sheet 10a. A thickness of the first thinned region 31 is less than a thickness of the flat region 4, and the first thinned region 31 is recessed toward the cathode current collector 1 relative to the flat region 4.

The cathode electrode sheet 10a further includes a cathode tab 5, and the cathode tab 5 can be formed by making one side of the cathode current collector 1 uncoated with the active material, that is, being formed through uncoating.

The cathode active material layer 2 includes a first thinned region 31 and a flat region 4. A thickness H1 of the first thinned region 31 is less than a thickness H2 of the flat region 4, which can make the first thinned region 31 recessed toward the cathode current collector 1 relative to the flat region 4. The first thinned region 31 can allow more electrolyte to pass through and can accommodate more electrolyte, so that the electrolyte can fully infiltrate the electrode sheet in a short time, improving the infiltration effect of the electrolyte on the cathode electrode sheet 10a and allowing the active material to react more fully with the electrolyte, thereby improving battery performance.

Furthermore, when a lithium-ion battery is charged, lithium ions are deintercalated from the active material of the cathode electrode sheet 10a. These lithium ions are diffused in the electrolyte to a surface of the anode electrode sheet 10b and intercalated into the active material of the anode electrode sheet 10b. If an active material capacity of the anode electrode sheet 10b is insufficient, and there is insufficient intercalation space, the lithium ions deintercalated from the active material of the cathode electrode sheet 10a cannot be intercalated into the active material of the anode electrode sheet 10b, and the lithium ions can only precipitate on the surface of the anode electrode sheet 10b, forming a gray substance layer. This is referred to as lithium precipitation.

Based on this, in these embodiments provided in the present application, the cathode active material layer 2 includes a first thinned region 31 and a flat region 4. A thickness H1 of the first thinned region 31 is less than a thickness H2 of the flat region 4, which can change a CB (Cell Balance) value at a position corresponding to the first thinned region 31, so that CB value ≥ 1, thereby alleviating lithium precipitation and improving battery performance.

CB value = capacity per unit area of anode electrode sheet / capacity per unit area of cathode electrode sheet.

Disposing the first thinned region 31 on the cathode active material layer 2 of the cathode electrode sheet 10a can make the capacity per unit area of the anode electrode sheet 10b greater than the capacity per unit area of the cathode electrode sheet 10a, allowing the anode electrode sheet 10b to have a sufficiently large capacity to accommodate the lithium ions deintercalated from the cathode electrode sheet 10a, thereby alleviating lithium precipitation and improving battery performance.

In some embodiments, the first thinned region 31 is disposed on a first side 11 of the cathode current collector 1 facing the cathode tab 5.

The first thinned region 31 is located at the side position of the cathode current collector 1, which can reduce step stress on the side of the cathode current collector 1, mitigating the problem of stress concentration on the side of the cathode current collector 1, reducing extrusion forces generated by mutual extrusion between sides of the electrode sheets when the electrode sheets swell, and reduce the phenomenon of electrode sheet squashing.

In some embodiments, a length extension direction of the first thinned region 31 is consistent with an extension direction of the side of the cathode current collector 1 on which the first thinned region 31 is located.

The first thinned region 31 extends along the extension direction of the side of the cathode current collector 1 on which the first thinned region 31 is disposed, which can reduce step stress on the side of the cathode current collector 1, mitigating the problem of stress concentration on the side of the cathode current collector 1, reducing mutual extrusion forces when the electrode sheets swell, and reducing the phenomenon of electrode sheet squashing.

A thickness of the first thinned region 31 gradually decreases from a direction close to the cathode tab 5 to a direction away from the cathode tab 5.

In some embodiments, an extension direction of the first side 11 is parallel to the third direction Z.

Referring to FIG. 10 and FIG. 11, in some embodiments, the cathode electrode sheet 10a further includes a first insulating layer 6, the first insulating layer 6 is disposed on the first side 11, and the first insulating layer 6 is away from the cathode tab 5 relative to the first thinned region 31.

The first insulating layer 6 is away from the cathode tab 5 relative to the first thinned region 31. In a process of dividing the current collector 20 into two cathode electrode sheets 10a, the position of the first insulating layer 6 of the current collector 20 rather than the cathode active material layer 2 is cut, reducing the occurrence of burrs on the cathode active material layer 2 and mitigating the problem of active material detachment caused by cutting the current collector 20 into electrode sheets.

A thickness of the first insulating layer 6 gradually decreases from the cathode tab 5 toward the first thinned region 31.

The first thinned region 31 and the first insulating layer 6 are smoothly connected to form an integral region, and a thickness of this integral region gradually decreases from the cathode tab 5 toward the first thinned region 31.

In some embodiments, the cathode electrode sheet 10a includes a cathode tab 5, and the cathode tab 5 is connected to a second side 12 of the cathode current collector 1. The first side 11 and the second side 12 are two opposite sides of the cathode current collector 1. An extension direction of the second side 12 is parallel to an extension direction of the first side 11.

The cathode active material layer 2 further includes a third thinned region 32 located on the second side 12.

Disposing the third thinned region 32 on the second side 12 of the cathode current collector 1 can increase the degree of infiltration of the electrolyte into the cathode electrode sheet 10a, and can change the CB value at the position corresponding to the third thinned region 32, so that the capacity per unit area of the active material of the anode electrode sheet 10b is greater than the capacity per unit area of the active material of the cathode electrode sheet 10a, thereby alleviating lithium precipitation and improving battery performance. Moreover, step stress on the side of the cathode current collector 1 can be reduced, mitigating the problem of stress concentration on the side of the cathode current collector 1, reducing mutual extrusion forces when the electrode sheets swell, and reducing the phenomenon of electrode sheet squashing.

A thickness of the third thinned region 32 gradually decreases from the first thinned region 31 toward the cathode tab 5.

In some embodiments, the extension direction of the second side 12 is parallel to the third direction Z.

In some embodiments, the cathode electrode sheet 10a further includes a second insulating layer 7, the second insulating layer 7 is disposed on the second side 12, and the second insulating layer 7 is closer to the cathode tab 5 relative to the third thinned region 32.

A thickness of the second insulating layer 7 gradually decreases from the third thinned region 32 toward the cathode tab 5.

The third thinned region 32 and the second insulating layer 7 are smoothly connected to form an integral region, and a thickness of this integral region gradually decreases from the third thinned region 32 toward the cathode tab 5.

The second insulating layer 7 is closer to the cathode tab 5 relative to the third thinned region 32. During cutting of the cathode tab 5, if a position exceeding the cathode tab 5 is cut, the cut position is the second insulating layer 7 rather than the cathode active material layer 2, reducing the occurrence of burrs on the cathode active material layer 2 and mitigating the problem of active material detachment caused by cutting the cathode tab 5.

The cathode current collector 1 further includes a third side 13 and a fourth side 14, and the third side 13 and the fourth side 14 are two opposite sides of the cathode current collector 1.

In an embodiment in which the cathode electrode sheet 10a is a square electrode sheet, the cathode current collector 1 includes a first side 11, a second side 12, a third side 13, and a fourth side 14.

Thinned regions may also be provided on the third side 13 and the fourth side 14. Disposing a thinned region at a side position of the cathode current collector 1 can reduce step stress on the side of the cathode current collector 1, mitigating the problem of stress concentration on the side of the cathode current collector 1, reducing mutual extrusion forces when the electrode sheets swell, and reducing the phenomenon of electrode sheet squashing.

Referring to FIG. 12 and FIG. 13, in some embodiments, the cathode active material layer 2 further includes a fourth thinned region 33 disposed between the first side 11 and the second side 12.

A thickness of the fourth thinned region 33 is less than a thickness of the flat region 4, which can make the fourth thinned region 33 recessed toward the cathode current collector 1 relative to the flat region 4. The fourth thinned region 33 can allow more electrolyte to pass through and can accommodate more electrolyte, so that the electrolyte can fully infiltrate the electrode sheet in a short time, improving the infiltration effect of the electrolyte on the cathode electrode sheet 10a, allowing the active material to react more fully with the electrolyte, and mitigating the problem of insufficient electrolyte infiltration in the central region of the electrode assembly 100, thereby improving battery performance.

In some embodiments, a length extension direction of the fourth thinned region 33 is consistent with the extension direction of the first side 11.

The extension direction of the first side 11 is parallel to the third direction Z, which means that the extension direction of the first side 11 is consistent with the length extension direction of the cathode electrode sheet 10a. A length extension direction of the fourth thinned region 33 is consistent with the extension direction of the first side 11. The fourth thinned region 33 can allow more electrolyte to pass through and can accommodate more electrolyte in a length direction of the cathode electrode sheet 10a, so that the electrolyte can fully infiltrate the electrode sheet in a short time, improving the infiltration effect of the electrolyte on the cathode electrode sheet 10a, allowing the active material to react more fully with the electrolyte, and mitigating the problem of insufficient electrolyte infiltration in the central region of the electrode assembly 100, thereby improving battery performance.

In some embodiments, the fourth thinned region 33 is located in the middle of the first side 11 and the second side 12.

The middle of the first side 11 and the second side 12 herein refers to a center based on a geometric dimension.

The electrode sheet in the middle region of the battery is a region which is difficult to infiltrate by the electrolyte, and in a later use period, electrolyte depletion is likely to occur in this region, leading to interface problems. Therefore, by arranging the fourth thinned region 33 in the middle of the first side 11 and the second side 12, an electrolyte transport channel can be constructed to mitigate the problem of insufficient electrolyte infiltration in the central region of the electrode assembly 100, thereby improving battery performance.

Referring to FIG. 14, in some embodiments, the cathode active material layer 2 further includes a fifth thinned region 34, and the fifth thinned region 34 is located in a corner region of the cathode electrode sheet 10a after winding.

At the corner of the cathode electrode sheet 10a after winding, there is a curvature at an interface between the electrode sheets, which can easily lead to interface problems. The cathode active material layer on the outer one of the cathode electrode sheet 10a and the anode electrode sheet 10b has a larger area. Therefore, disposing the fifth thinned region 34 at the corner of the cathode electrode sheet 10a after winding can change the CB value at the corner, so that the capacity per unit area of the anode electrode sheet is greater than the capacity per unit area of the cathode electrode sheet, mitigating the lithium precipitation problem caused by insufficient capacity of the anode electrode sheet and improving battery performance.

Referring to FIG. 11 to FIG. 13, in some embodiments, the cathode current collector 1 includes a first side surface 15 and a second side surface 16 facing each other, and at least one of the first side surface 15 and the second side surface 16 is provided with a cathode active material layer 2.

The cathode active material layer 2 is formed by applying an active material to the cathode current collector 1, and the active material can undergo a chemical reaction with the electrolyte to charge the battery.

Referring to FIG. 12 and FIG. 13, in some embodiments, the first side surface 15 and the second side surface 16 are each provided with a cathode active material layer 2, and at least one of the cathode active material layer 2 on the first side surface 15 and the cathode active material layer 2 on the second side surface 16 has a first thinned region 31 and a flat region 4.

Referring to FIG. 12, the cathode active material layers 2 on the first side surface 15 and the second side surface 16 of the cathode current collector 1 are each provided with a first thinned region 31 and a flat region 4, and the first side surface 15 and the second side surface 16 are each provided with a third thinned region 32 and a fourth thinned region 33.

Referring to FIG. 13, the cathode active material layer 2 on the first side surface 15 of the cathode current collector 1 is provided with a third thinned region 32 and a flat region 4, and the cathode active material layer 2 on the second side surface 16 of the cathode current collector 1 is provided with a first thinned region 31, a third thinned region 32, a fourth thinned region 33, and a flat region 4.

Optional provision of the first thinned regions 31 on the first side surface 15 and the second side surface 16 of the cathode current collector 1 can change a CB value at a position where the first thinned region 31 is provided, so that the capacity per unit area of the anode electrode sheet is greater than the capacity per unit area of the cathode electrode sheet, mitigating the lithium precipitation problem caused by insufficient capacity of the anode electrode sheet and improving battery performance.

In some embodiments, an area of the first thinned region 31 is less than an area of the flat region 4.

The flat region 4 may be formed by applying an active material to the cathode current collector 1, and the first thinned region 31 can be formed by thinning the flat region 4. Alternatively, the first thinned region 31 and the flat region 4 are formed by applying active materials with different thicknesses.

The flat region 4 occupies most of the area of the cathode current collector 1, to increase the energy density of the battery and improve battery performance. The first thinned region 31 is configured to change a local CB value and to increase an electrolyte storage capacity, thereby improving the electrolyte infiltration effect.

In some embodiments, a ratio of a thickness H1 of the first thinned region 31 to a thickness H2 of the flat region 4 is greater than or equal to 70%. The thickness H1 of the first thinned region 31 is less than the thickness H2 of the flat region 4.

An excessively small thickness H1 of the first thinned region 31 reduces the energy density of the battery, but an excessively large thickness H1 of the first thinned region 31 is unable to change the CB value and improve the electrolyte infiltration effect. Therefore, the ratio of the thickness H1 of the first thinned region 31 to the thickness H2 of the flat region 4 being greater than or equal to 70% can not only satisfy the energy density requirements of the battery but also have functions of changing the CB value and improving the electrolyte infiltration effect.

In some embodiments, the thickness H1 of the first thinned region 31 is less than or equal to 50 um. Optionally, the thickness H1 of the first thinned region 31 is less than or equal to 15 um.

In some embodiments, the flat region 4 is a normal region of the cathode electrode sheet 10a. The first thinned region 31 is a locally thinned region of the cathode electrode sheet 10a.

In the locally thinned region, the CB value thereof can be changed by reducing the cathode active material layer in a local region through physical thinning. Alternatively, instead of physical thinning, a layer of material having different properties (such as high resistance and low gram capacity) from a main body region can be applied to a region where thinning is theoretically required for the cathode. For example: an anode with a higher gram capacity or a cathode with a lower gram capacity is applied to a region where the CB value needs to be changed, or a high-resistance coating or active material is provided in this region, so that lithium deintercalated from the cathode in this region is reduced, thereby changing the CB value of this region.

In addition to the provision of a thinned region at an edge position to change the CB value at the edge position, a thinned region can also be provided in the middle position of the cathode electrode sheet 10a, because the middle position of the cathode electrode sheet 10a is usually a region where electrolyte infiltration is insufficient. The thinning design in this region can not only change the CB value of this region to improve battery performance but also form a groove in this region to store more electrolyte, thereby improving the electrolyte infiltration effect. In addition, the thinning design may also be applied to the corner region of the cathode electrode sheet 10a to mitigate the problems of difficulty in cell infiltration and insufficient CB value at the corner.

Referring to FIG. 15, some embodiments of the present application further provide an electrode assembly, which includes a cathode electrode sheet 10a and an anode electrode sheet 10b, where the polarity of the cathode electrode sheet 10a is opposite to the polarity of the anode electrode sheet 10b.

When a lithium-ion battery is charged, lithium ions are deintercalated from the active material of the cathode electrode sheet 10a. These lithium ions are diffused in the electrolyte to a surface of the anode electrode sheet 10b and intercalated into the active material of the anode electrode sheet 10b. If the active material capacity of the anode electrode sheet 10b is insufficient, and there is insufficient intercalation space, the lithium ions deintercalated from the active material of the cathode electrode sheet 10a cannot be intercalated into the active material of the anode electrode sheet 10b, and the lithium ions can only precipitate on the surface of the anode electrode sheet 10b, causing lithium precipitation.

Therefore, disposing the first thinned region 31 at a position of the cathode electrode sheet 10a away from the cathode tab 5 can change a CB (Cell Balance) value at a position corresponding to the first thinned region 31, so that the capacity per unit area of the anode electrode sheet is greater than the capacity per unit area of the cathode electrode sheet, allowing the anode electrode sheet 10b to have a sufficiently large capacity to accommodate the lithium ions deintercalated from the cathode electrode sheet 10a, thereby alleviating lithium precipitation and improving battery performance.

The cathode electrode sheet 10a and the anode electrode sheet 10b are stacked, and the cathode tab 5 of the cathode electrode sheet 10a and the anode tab 5' of the anode electrode sheet 10b face each other.

A thinned region is formed at a position of the anode electrode sheet 10b close to the anode tab 5'. If the first thinned region 31 is not disposed at the position of the cathode electrode sheet 10a away from the cathode tab 5, the active material capacity of the anode electrode sheet 10b may be insufficient, and there is insufficient intercalation space, so that the lithium ions deintercalated from the active material of the cathode electrode sheet 10a cannot be intercalated into the active material of the anode electrode sheet 10b, causing lithium precipitation. Therefore, disposing the first thinned region 31 of the cathode electrode sheet 10a on the first side 11 of the cathode current collector 1 can reduce the amount of lithium ions deintercalated from the cathode electrode sheet 10a, so that the capacity per unit area of the anode electrode sheet is greater than the capacity per unit area of the cathode electrode sheet, allowing the anode electrode sheet 10b to have a sufficiently large capacity to accommodate the lithium ions deintercalated from the cathode electrode sheet 10a, thereby alleviating lithium precipitation and improving battery performance.

In the embodiments shown in FIG. 5, a width of the second thinned region 3' on the side of the anode electrode sheet 10b on which the anode tab 5' is located is W2. A width of the first thinned region 31 corresponding to the first side of the cathode electrode sheet 10a is W1. The first side is a slit edge. A width of the third thinned region 32 corresponding to the side (second side) of the cathode electrode sheet 10a on which the cathode tab 5 is located is W3.

In some embodiments, a value of W1 is within a range of (0, 30) mm.

In some embodiments, a value of W2 is within a range of (0, 30) mm.

In some embodiments, a value of W3 is within a range of (0, 30) mm.

In some embodiments, the value of W2 is greater than or equal to the value of W1.

In some embodiments, W2 = W1 + A.

Due to relevant design principles, an edge of the side of the anode electrode sheet 10b on which the anode tab 5' is located extends beyond an edge of the first side of the cathode electrode sheet 10a. The extension part of the first side of the anode electrode sheet 10b does not need to correspond to thinning of the first side of the cathode electrode sheet 10a. Therefore, theoretically, a thinned width W2 of the first side of the anode electrode sheet 10b is greater than a thinned width W1 of the second side of the cathode electrode sheet 10a.

A is a constant, measured in millimeters. In some embodiments, $A \in [0.2, 8]$. Optionally, a value of A is within a range of [0.5, 5].

The limitation on A can guide the thinned width of the cathode electrode sheet 10a in design. An excessively large thinned width reduces energy of the battery, but an excessively small thinned width is unable to cover the thinned width of the anode electrode sheet 10b, thus failing to achieve the desired effect.

Some embodiments of the present application further provide a manufacturing method of a cathode electrode sheet 10a, which includes the following steps:

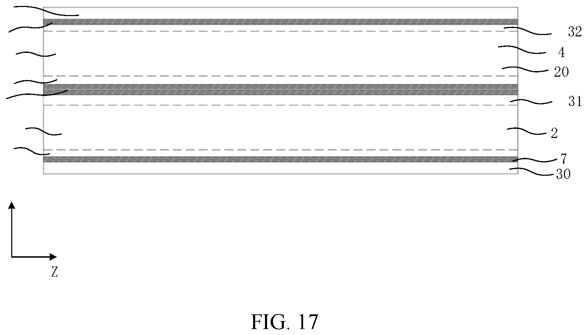

referring to FIG. 16 and FIG. 17, preparing a current collector 20, and providing tab regions 30 respectively on two opposite sides of the current collector 20; and
applying an active material to a region of the current collector 20 located between the two tab regions 30 to form a cathode active material layer 2, where the cathode active material layer 2 includes a thinned region 3a (including two first thinned regions 31) and a flat region 4, and a thickness H1 of the thinned region 3a is less than a thickness H2 of the flat region 4.

The current collector 20 is divided into two cathode electrode sheets 10a from the central region between the two tab regions 30 of the current collector 20, that is, the current collector 20 is divided into two cathode electrode sheets 10a from the middle position of the two first thinned regions 31, where the first thinned region 31 of each cathode electrode sheet 10a is located on the first side 11 of the cathode current collector 1.

The thickness H1 of the first thinned region 31 is less than the thickness H2 of the flat region 4, which can change the CB value at the position corresponding to the first thinned region 31, so that the capacity per unit area of the anode electrode sheet is greater than the capacity per unit area of the cathode electrode sheet, mitigating the lithium precipitation problem caused by insufficient capacity of the anode electrode sheet and improving battery performance. Moreover, step stress on the side of the cathode current collector 1 can be reduced, mitigating the problem of stress concentration on the side of the cathode current collector 1, reducing mutual extrusion forces when the electrode sheets swell, and reducing the phenomenon of electrode sheet squashing. Furthermore, the first thinned region 31 is recessed toward the cathode current collector 1 relative to the flat region 4. The first thinned region 31 can allow more electrolyte to pass through and can accommodate more electrolyte, so that the electrolyte can fully infiltrate the electrode sheet in a short time, improving the infiltration effect of the electrolyte on the cathode electrode sheet 10a and allowing the active material to react more fully with the electrolyte, thereby improving battery performance.

The current collector 20 is divided into two cathode electrode sheets 10a from the central region between the two tab regions 30 of the current collector 20. The cutting is performed in the middle region of the current collector 20. Therefore, for each cathode electrode sheet 10a, a cut edge of the middle region of the current collector 20 is a slit edge, which is the first side 11, and the side corresponding to the cathode tab 5 of the cathode electrode sheet 10a is the second side 12.

Referring to FIG. 17, in some embodiments, an insulating material is applied to the central region between the two tab regions 30 of the current collector 20 to form a first insulating layer 6, and the cathode active material layer 2 is located between the first insulating layer 6 and the tab region 30 on one side.

The current collector 20 is divided into two cathode electrode sheets 10a from the central region between the two tab regions 30 of the current collector 20; an insulating material is applied to the central region between the two tab regions 30 of the current collector 20 to form a first insulating layer 6; and in a process of dividing the current collector 20 into two cathode electrode sheets 10a, the position of the first insulating layer 6 of the current collector 20 rather than the cathode active material layer 2 is cut, reducing the occurrence of burrs on the cathode active material layer 2 and mitigating the problem of active material detachment caused by cutting the current collector 20 into electrode sheets.

In some embodiments, the first thinned region 31 is disposed between the cathode active material layer 2 and the first insulating layer 6.

Disposing the first thinned region 31 on the first side 11 of the cathode current collector 1 can increase the degree of infiltration of the electrolyte into the electrode sheet 1, and can change the CB value at the position corresponding to the first thinned region 31, so that the capacity per unit area of the anode electrode sheet is greater than the capacity per unit area of the cathode electrode sheet, mitigating the lithium precipitation problem caused by insufficient capacity of the anode electrode sheet and improving battery performance. Moreover, step stress on the side of the cathode current collector 1 can be reduced, mitigating the problem of stress concentration on the side of the cathode current collector 1, reducing mutual extrusion forces when the electrode sheets swell, and reducing the phenomenon of electrode sheet squashing.

Although the present application has been described with reference to preferred embodiments, various improvements can be made thereto and components can be replaced with equivalents without departing from the scope of the present application. In particular, as long as there is no structural conflict, the technical features mentioned in the embodiments can be combined in any way. The present application is not limited to the specific embodiments disclosed herein, but includes all technical solutions falling within the scope of the claims.

## Claims

1. A battery cell, comprising:

   a cathode electrode sheet (10a), comprising a cathode current collector (1) and a cathode active material layer (2) disposed at the cathode current collector (1), wherein the cathode active material layer (2) comprises a first thinned region (31), and the first thinned region (31) is located on a side of the cathode current collector (1) facing a cathode tab (5); and
   an anode electrode sheet (10b), stacked with the cathode electrode sheet (10a) along a first direction (X), wherein the anode electrode sheet (10b) comprises an anode current collector (1') and an anode active material layer (2') disposed at the anode current collector (1'), the anode active material layer (2') comprises a second thinned region (3'), the second thinned region (3') is disposed on a side of the anode current collector (1') on which an anode tab (4') is provided, and the second thinned region (3') at least partially overlaps with the first thinned region (31).

2. The battery cell according to claim 1, wherein a dimension W1 of the first thinned region (31) along a second direction (Y) is less than or equal to a dimension W2 of the second thinned region (3') along the second direction (Y), wherein the second direction (Y) intersects the first direction (X), and the second direction (Y) is parallel to a direction in which the anode tab (4') is away from the anode current collector (1').

3. The battery cell according to claim 2, wherein W1 $\in$ [2, 20] mm, and W2 $\in$ [2, 20] mm.

4. The battery cell according to claim 2 or 3, wherein W1 $\in$ [3, 8] mm, and W2 $\in$ [3, 10] mm.

5. The battery cell according to any one of claims 1 to 4, wherein the first thinned region (31) and the second thinned region (3') are each thinned from a position away from the anode tab (4') toward a position close to the anode tab (4'); a distance S1 between a position from which the first thinned region (31) is thinned and the anode tab (4') is greater than or equal to a distance S2 between a position from which the second thinned region (3') is thinned and the anode tab (4').

6. The battery cell according to claim 5, wherein a distance S3 between the position from which the first thinned region (31) is thinned and the position from which the second thinned region (3') is thinned is in a range of [0, 5] mm.

7. The battery cell according to claim 6, wherein S3 $\in$ [0, 3] mm.

8. The battery cell according to any one of claims 1 to 7, wherein the cathode electrode sheet (10a) further comprises a first insulating layer (6), and the first insulating layer (6) is disposed on a side of the first thinned region (31) away from the cathode tab (5).

9. The battery cell according to any one of claims 1 to 8, wherein the cathode active material layer (2) further comprises a third thinned region (32), and the third thinned region (32) is located on a side of the cathode current collector (1) on which the cathode tab (5) is provided.

10. The battery cell according to claim 9, wherein the cathode electrode sheet (10a) further comprises a second insulating layer (7), and the second insulating layer (7) is located between the third thinned region (32) and the cathode tab (5).

11. The battery cell according to any one of claims 1 to 10, wherein the cathode active material layer (2) further comprises a fourth thinned region (33), and the fourth thinned region (33) is located between a side of the cathode current collector (1) on which the cathode tab (5) is provided and the side facing the cathode tab (5).

12. The battery cell according to any one of claims 1 to 11, wherein the cathode active material layer (2) further comprises a fifth thinned region (34), and the fifth thinned region (34) is located in a corner region of the cathode electrode sheet (10a) after winding.

13. A battery, comprising a box assembly (301) and the battery cell according to any one of claims 1 to 12, wherein the battery cell is disposed within the box assembly (301).

14. An electric apparatus, comprising the battery according to claim 13.

15. A cathode electrode sheet, comprising:

a cathode current collector (1); and
a cathode active material layer (2), disposed at the cathode current collector (1), wherein the cathode active material layer (2) comprises a first thinned region (31), and the first thinned region (31) is located on a side of the cathode current collector (1) facing a cathode tab (5).

16. A manufacturing method of a cathode electrode sheet, comprising the following steps:

preparing a current collector (20), wherein the current collector (20) has tab regions (30) respectively on two opposite sides;
applying an active material to a region of the current collector (20) located between the two tab regions (30) to form a cathode active material layer (2), and thinning a region of the cathode active material layer (2) located in the middle of the two tab regions (30) to form a thinned region (3a); and
dividing the current collector (20) into two cathode electrode sheets in the thinned region (3a).

FIG. 1

FIG. 2

FIG. 3

FIG. 4

FIG. 5

FIG. 6

EP 4 756 894 A1

4'

W2

X

FIG. 7

FIG. 8

W3

H2

16

H1

W1

FIG. 9

FIG. 10

FIG. 11

FIG. 12

FIG. 13

FIG. 14

FIG. 15

W2

Y

FIG. 16

FIG. 17

## INTERNATIONAL SEARCH REPORT

| | |
|---|---|
| International application No. | |
| | **PCT/CN2024/086537** |

**A. CLASSIFICATION OF SUBJECT MATTER**

H01M4/13(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS: CNTXT; DWPI; SIPOABS; USTXT; CNKI; IEEE: 减薄, 减少, 阴极, 正极, 极耳, 相对, 相反, 远离, 析锂, 中间, 之间, 面积, 容量, attenuated, decrease, reduce, cathode, anode, Li, separate, precipitation, middle, area, capacity

**C. DOCUMENTS CONSIDERED TO BE RELEVANT**

| Category* | Citation of document, with indication, where appropriate, of the relevant passages | Relevant to claim No. |
|---|---|---|
| X | CN 115275092 A (JIANGSU CONTEMPORARY AMPEREX TECHNOLOGY LTD. et al.) 01 November 2022 (2022-11-01) description, paragraphs [0038]-[0089], and figure 5 | 1-10, 13-15 |
| Y | CN 115275092 A (JIANGSU CONTEMPORARY AMPEREX TECHNOLOGY LTD. et al.) 01 November 2022 (2022-11-01) description, paragraphs [0038]-[0089], and figure 5 | 11-12 |
| Y | CN 115863787 A (GAC AION NEW ENERGY AUTOMOBILE CO., LTD.) 28 March 2023 (2023-03-28) description, paragraphs [0053]-[0058], and figures 4-5 | 11 |
| Y | CN 217740615 U (WUXI LEAD INTELLIGENT EQUIPMENT CO., LTD.) 04 November 2022 (2022-11-04) description, paragraphs [0051]-[0056], and figures 2-3 | 12 |
| X | WO 2022164250 A1 (LG ENERGY SOLUTION, LTD.) 04 August 2022 (2022-08-04) description, paragraphs [0050]-[0089], and figures 2-8 | 1-2, 5-10, 13-16 |
| Y | WO 2022164250 A1 (LG ENERGY SOLUTION, LTD.) 04 August 2022 (2022-08-04) description, paragraphs [0050]-[0089], and figures 2-8 | 11-12 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **03 June 2024** | **26 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/086537** |

**C.    DOCUMENTS CONSIDERED TO BE RELEVANT**

| Category* | Citation of document, with indication, where appropriate, of the relevant passages | Relevant to claim No. |
|---|---|---|
| A | CN 111540909 A (JIANGSU TAFEL NEW ENERGY TECHNOLOGY CO., LTD. et al.) 14 August 2020 (2020-08-14)<br>entire document | 1-16 |
| A | CN 111816838 A (ZHUHAI COSMX BATTERY CO., LTD.) 23 October 2020 (2020-10-23)<br>entire document | 1-16 |

Form PCT/ISA/210 (second sheet) (July 2022)

**INTERNATIONAL SEARCH REPORT**
**Information on patent family members**

International application No.

**PCT/CN2024/086537**

| Patent document cited in search report | | | Publication date (day/month/year) | Patent family member(s) | | | Publication date (day/month/year) |
|---|---|---|---|---|---|---|---|
| CN | 115275092 | A | 01 November 2022 | CN | 115275092 | B | 07 July 2023 |
| | | | | WO | 2024060618 | A1 | 28 March 2024 |
| CN | 115863787 | A | 28 March 2023 | CN | 219123305 | U | 02 June 2023 |
| CN | 217740615 | U | 04 November 2022 | WO | 2023165279 | A1 | 07 September 2023 |
| WO | 2022164250 | A1 | 04 August 2022 | EP | 4250413 | A1 | 27 September 2023 |
| | | | | JP | 2024503417 | A | 25 January 2024 |
| | | | | US | 2024079633 | A1 | 07 March 2024 |
| | | | | KR | 20220109340 | A | 04 August 2022 |
| | | | | CN | 116830345 | A | 29 September 2023 |
| | | | | IN | 202317046117 | A | 24 November 2023 |
| CN | 111540909 | A | 14 August 2020 | | None | | |
| CN | 111816838 | A | 23 October 2020 | CN | 111816838 | B | 31 August 2021 |

Form PCT/ISA/210 (patent family annex) (July 2022)

# EP 4 756 894 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311157607